## Europäisches Patentamt

## European Patent Office

## Office européen des brevets

(19)

(11) Veröffentlichungsnummer: **0 055 448**
**B1**

(12)

# EUROPÄISCHE PATENTSCHRIFT

(45) Veröffentlichungstag der Patentschrift:
**23.10.85**

(51) Int. Cl.⁴: **F 16 L 33/02**, F 16 B 2/08

(21) Anmeldenummer: **81110648.3**

(22) Anmeldetag: **21.12.81**

(54) **Verbindungsvorrichtung für zwei übereinanderliegende Bandenden.**

(30) Priorität: **31.12.80 DE 3049608**

(43) Veröffentlichungstag der Anmeldung:
**07.07.82 Patentblatt 82/27**

(45) Bekanntmachung des Hinweises auf die Patenterteilung:
**23.10.85 Patentblatt 85/43**

(84) Benannte Vertragsstaaten:
**AT CH FR GB IT LI NL SE**

(56) Entgegenhaltungen:
**DE - C - 502 974**
**DE - C - 1 039 800**
**DE - C - 1 068 963**
**DE - C - 1 946 367**
**DE - C - 2 255 761**
**FR - A - 2 315 027**
**US - A - 2 746 107**

(73) Patentinhaber: **Görg, Helmut, Fasanenweg 3,**
**D-6601 Scheidt (DE)**

(72) Erfinder: **Görg, Helmut, Fasanenweg 3, D-6601 Scheidt**
**(DE)**

(74) Vertreter: **Bernhardt, Winfrid, Dr.-Ing.,**
**Kobenhüttenweg 43, D-6600 Saarbrücken (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

## Beschreibung

Die Erfindung betrifft eine Verbindungsvorrichtung für zwei übereinanderliegende, unter ständigem, entgegengesetzten Zug in ihrer Längsrichtung stehende Bandteile, insbesondere den Bandenden einer Rohrschelle, die mehrere in Längsrichtung hintereinander angeordnete Querschlitze aufweisen, mit einer Bandklemme, die durch einander überlappende Querschlitze der Bandteile mit einem Steg hindurchsteckbar ist, der ein das untere Bandteil untergreifendes Hakenende aufweist.

Zur Befestigung von Rohren ist es bekannt, Rohrschellen aus bandförmigem Material zu verwenden, das um das Rohr herumgelegt wird und dessen Enden miteinander verbunden werden. In der Regel wird das Metallband mit einem Ring aus Gummi oder einem anderen Elastomermaterial unterlegt. Die Enden des Metallbandes werden unter Spannung des Metallbandes miteinander verbunden.

Bei einer bekannten Verbindungsvorrichtung der eingangs genannten Art (DE-C-1 946 367) weisen die übereinander zu legenden Enden des Metallbandes Öffnungen auf, die durch Heraustrennen eines die Querschlitze begrenzenden Steges vergrößert sind. Diese vergrößerten Öffnungen werden übereinandergelegt und durch sie werden die Beine einer schleifenförmig gebogenen Bandklemme hindurchgesteckt. Die Bandklemme weist an ihren unter dem unteren Bandende liegenden Schenkeln nach außen gerichtete Haken auf, die entgegen der Spannkraft der miteinander verbundenen Bandenden auseinanderfedern. Die vergrößerten Öffnungen an den Bandenden sind zum Hindurchstecken der Haken der Bandklemme erforderlich. Bei dieser Verbindungsvorrichtung müssen die erweiterten Öffnungen eine genau definierte Lage zueinander einnehmen, so daß, wenn diese Öffnungen übereinanderliegen, das Band die gewünschte Spannung aufweist. Außerdem ist es erforderlich, zur Bildung der vergrößerten Öffnungen jeweils einen Steg aus dem Band herauszutrennen. Dies macht die Montage zeitraubend und aufwendig. Außerdem steht die schleifenförmige Bandklemme nach außen von dem das Rohr umgebenden Band ab und bildet somit ein Hindernis. Soll die Verbindungsvorrichtung nachträglich wieder gelöst werden, dann muß das Band unter Aufbringung einer erheblichen Kraft mit einem Werkzeug um ein beträchtliches Maß gespannt werden, so daß die vergrößerten Öffnungen wieder übereinanderliegen und die Bandklemme herausgenommen werden kann.

Ferner ist es bekannt, zwei Bandenden dadurch miteinander zu verbinden, daß an dem unteren Bandende Widerhaken angebracht sind, die in die Querschlitze des oberen Bandendes eingreifen. Die Widerhaken stehen an der Verbindungsstelle nach außen hin ab und bilden eine beträchtliche Gefahrenquelle. Ferner ist es nicht möglich, endloses Bandmaterial zu benutzen, d. h. Bandmaterial, das über eine beliebige Länge vorgefertigt ist und am Montageort jeweils auf Maß geschnitten wird, weil bei einem derartigen Bandmaterial die nach außen abstehenden Widerhaken, die jeweils an dem einen Bandende erforderlich sind, fehlen würden (DE-C-2 255 761).

Schließlich ist eine Bandklammer zur Sicherung einer Bandschlaufe bekannt (FR-A-2 315 027). Sie greift mit einem Haken durch übereinandergelegte runde Löcher des Bandes und umfaßt mit einem länglichen Schlitz die beiden am Ende der Bandschlaufe zusammengeführten Bandteile auf deren Querschnitt.

Die Klammer wird montiert, indem der Haken eingesteckt und der Schlitz durch Drehung der Klammer um den Steg des Hakens als Achse auf die beiden Bandteile aufgeschoben wird. In der Endstellung hakt ein am Ende des Schlitzes ausgebildeter weiterer Haken hinter der einen Bandkante ein. Die Klammer ist gesichert durch Querzug der beiden Bandteile an den Kanten des Schlitzes, wo die beiden Bandteile infolge der Schlaufenbildung noch auseinanderstreben.

Der Erfindung liegt die Aufgabe zugrunde, eine Verbindungsvorrichtung der eingangs genannten Art zu schaffen, die die Benutzung von Bandmaterial mit gleichförmigen Querschlitzen für unterschiedliche Rohrweiten ermöglicht und auf einfache Weise geschlossen und erforderlichenfalls nachträglich auch wieder geöffnet werden kann.

Zur Lösung dieser Aufgabe ist erfindungsgemäß vorgesehen, daß die Bandklemme einen einzigen solchen Steg aufweist, an dem zwei Schlitzkanten verschiedener Bandteile an verschiedenen Seiten mit der Zugkraft der Bandteile anliegen, und daß sich an den Steg ein mit einer abstehenden Greiflasche versehener, in Bandrichtung sich erstreckender Abschnitt anschließt, wobei aufgrund der um etwa Banddicke versetzten Angriffspunkte der Zugkräfte ein Drehmoment auf den Steg ausgeübt wird, so daß der an den Steg anschließende Abschnitt vom Steg gegen die Außenseite des äußeren Bandes gedrückt und gesichert ist.

Eine derartige Bandklemme bildet einen Steg, der lediglich durch die einander überlappenden üblichen Querschlitze der beiden Bandteile hindurchgesteckt wird, ohne daß vergrößerte Öffnungen an der Verbindungsstelle erforderlich wären. Der Steg wird in den Öffnungen der in entgegengesetzten Richtungen unter Zug stehenden Bandteile auf Scherung beansprucht und verhindert das Auseinanderziehen. Dabei wird der etwa rechtwinklig von dem Steg abgehende Abschnitt von außen gegen die Oberseite des oberen Bandteils gedrückt, wo er sich anlegt. Die Greiflasche ermöglicht ein einfaches Ansetzen der Bandklemme und erforderlichenfalls auch eine leichte Demontage.

Um die Verbindung der Bandteile durch Einstecken der Bandklemme in übereinanderliegende Querschlitze zu ermöglichen, können die Bandteile mit einem Werkzeug durch Übereinanderziehen vorgespannt werden. In ein Paar von Querschlitzen wird dann der Steg der Bandklemme eingesetzt. Wenn anschließend das Werkzeug abgesetzt wird, gehen die Bandteile wieder geringfügig auseinander, wodurch der Steg der Bandklemme so verschwenkt wird, daß der sich rechtwinklig an den Steg anschließende Abschnitt von außen her gegen das obere Bandteil gelegt wird. Anschließend kann die Greiflasche unter bleibender Verformung niedergedrückt werden, so daß sie sich ebenfalls flach an das obere Bandteil anlegt. Zu diesem Zweck kann sich an der Verbindungsstelle zwischen dem Abschnitt und der Greiflasche eine Schwächungsstelle befinden, um die die Greiflasche umgebogen wird.

Der das untere Bandteil untergreifende Haken kann gemäß einer Variante der Erfindung in Gegenrichtung zur Greiflasche von dem Steg abstehen. Der Haken bildet dann mit dem Steg und dem äußeren Abschnitt ein etwa Z-förmiges Teil, dessen Mittelbalken aus dem Steg besteht, an dem die die Querschlitze begrenzenden Leisten angreifen und der das eigentliche Verriegelungselement bildet. Eine derartige Bandklemme hat den Vorteil, daß die Querschlitze der beiden Bandteile sich nur geringfügig überlappen müssen, um die Bandklemme montieren zu können. Andererseits ist beim Lösen der Bandklemme auch nur eine geringe Zusatzspannung mit einem Werkzeug aufzubringen, um die Bandklemme wieder herausziehen zu können.

Bei einer anderen Variante ist der Haken der Bandklemme in Richtung auf die Greiflasche zurückgebogen. Der Haken hat zusammen mit dem Steg und dem Abschnitt der Bandklemme eine etwa U-förmige Gestalt. Für die Montage dieser Bandklemme ist es erforderlich, die beiden Bandteile um ein größeres Maß übereinanderzuziehen, so daß die übereinanderliegenden Querschlitze sich um ein größeres Maß überlappen als bei der ersten Variante. Der Vorteil der zweiten Variante liegt darin, daß die Verriegelung der Bandteile schwerer zu lösen ist, und daß ein unbeabsichtigtes Lösen praktisch ausgeschlossen ist. In beiden Fällen kann die Greiflasche nachträglich umgebogen und an die Umfangsfläche des äußeren Bandteils angelegt werden.

Die zu verbindenden Bandteile sind im Falle einer Schelle die entgegengesetzten Enden eines einzigen Bandes. Es ist aber auch möglich, zwei verschiedene Bänder mit der erfindungsgemäßen Verbindungsvorrichtung miteinander zu koppeln.

In vorteilhafter Weiterbildung der Erfindung sind die Bandteile in Querrichtung gewölbt, greift das Hakenende unter die Wölbung und weist die Bandklemme an dem sich flach auf das obere Bandteil auflegenden Abschnitt seitlich schräg abstehende Laschen derart auf, daß sie sich der Außenkontur des betreffenden Bandteils eng anliegend anpaßt.

Wenn die Bandteile nur im Breitenbereich der Querschlitze etwa trapezförmig nach außen gewölbt sind, entspricht vorzugsweise die Breite des Steges der Breite des mittleren Trapezbalkens der die Querschlitze begrenzenden Leisten.

Im folgenden wird unter Bezugnahme auf die Zeichnungen ein Ausführungsbeispiel der Erfindung näher erläutert. Es zeigt

Figur 1 ein Band, dessen Enden miteinander zu verbinden sind, in gestrecktem Zustand,

Figur 2 eine Seitenansicht des Bandes nach Figur 1,

Figur 3 einen Schnitt entlang der Linie III-III durch das Band,

Figur 4 einen Querschnitt der montierten Verbindungsvorrichtung,

Figur 5 eine erste Variante der Bandklemme und

Figur 6 eine zweite Variante der Bandklemme.

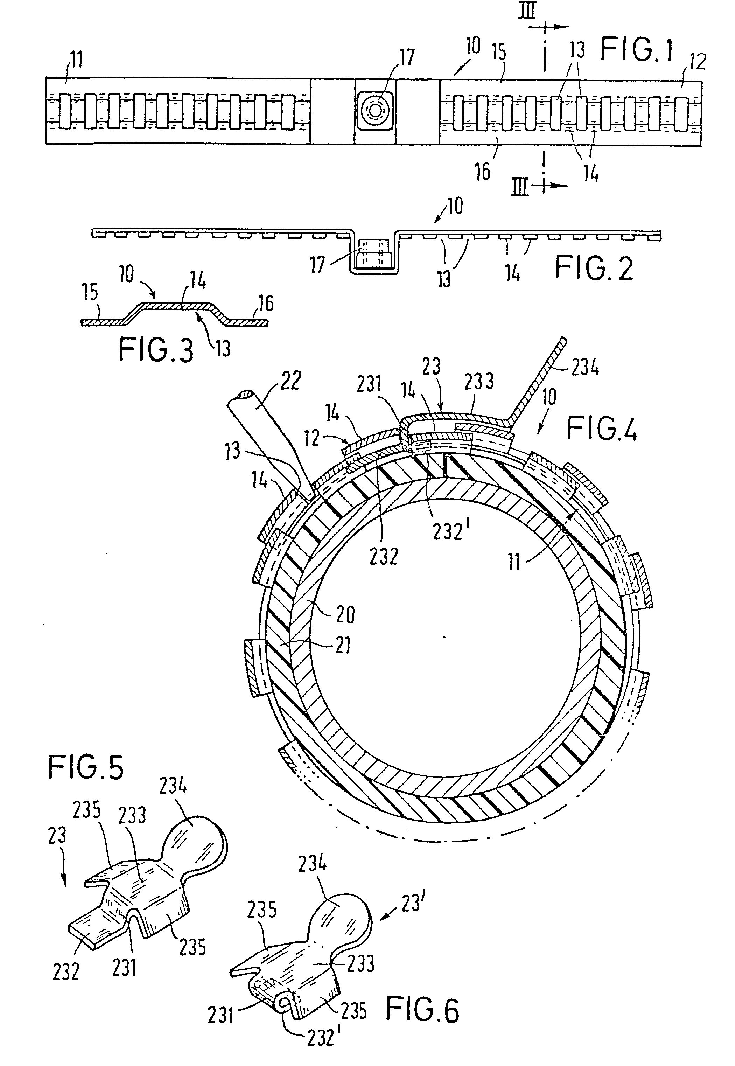

Das in den Figuren 1, 2 und 3 dargestellte Band 10 besteht aus einem Metallstreifen, dessen Bandenden 11, 12 bzw. Endbereiche entweder übereinandergelegt werden oder mit dem Ende eines gleichartig ausgebildeten anderen Bandes übereinandergelegt und verbunden werden können. Das Band 10 weist in gleichmäßigen Abständen äquidistante Querschlitze 13 auf, die durch Materialentnahme, z. B. durch Ausstanzen, hergestellt sind und somit rechteckige Fenster bilden. Die Querschlitze 13 sind jeweils durch querlaufende Leisten 14 voneinander getrennt. Wie insbesondere die Figuren 2 und 3 zeigen, sind die Leisten 14 trapezförmig nach außen gebogen bzw. gewölbt. Die querlaufenden Leisten 14 enden jeweils in Längsstreifen 15, 16, die in einer gemeinsamen Ebene liegen und die die Querschlitze 13 an den Seiten begrenzen. Die Flanken der Leisten 14 steigen aus der Ebene der Streifen 15 und 16 unter einem Winkel von ca. 30° – 45° an und gehen in den geradlinigen Mittelabschnitt 14 über.

Bei dem in den Figuren 1 und 2 dargestelltem Band ist in der Bandmitte (in Längsrichtung gesehen) ein Kupplungsstück 17 vorgesehen, das in einer von Querschlitzen freien U-förmigen Ausbiegung des Bandes untergebracht ist und ein Innengewinde aufweist, in das eine Schraube zur Befestigung des Bandes an einer Stütze eingeschraubt werden kann.

Figur 4 zeigt das als Rohrschelle verwendete Band 10. Das Band 10 ist um ein Rohr 20 herumgelegt, nachdem zuvor das Rohr mit einer Gummimanschette 21 umhüllt worden ist. Das Band ist mit seiner flachen Seite, die in Figur 2 nach oben weist, um die Gummimanschette 21 herumgelegt, wobei das Bandende 12 über das Bandende 11 gewickelt ist. Da die Breite der Stege 14 etwas größer ist als die Breite der Querschlitze 13, gleiten die Bandenden aufeinander ohne sich zu verhaken. Sie können daher gespannt werden. Das Spannen erfolgt dadurch, daß zunächst das äußere Bandende 14 von Hand fest um das darunterliegende Bandende 12 gezogen wird. Anschließend kann in zwei einander überlappende Querschlitze das Bandende ein Werkzeug, z. B. ein Schraubenzieher 22, eingesteckt werden, der durch Verschwenken um seine Spitze herum die beiden Bandenden noch stärker verspannt. Auch die Verwendung einer geeigneten Zange, die mit ihren Zangenbeinen in Querschlitze der beiden Bandenden eingesetzt und anschließend zusammengedrückt wird, ist zur Aufbringung einer zusätzlichen Spannung möglich.

Wenn die gewünschte Spannung erreicht ist, wird in zwei übereinanderliegende Querschlitze 13 die Bandklemme 23 eingesteckt. Diese besteht aus Metallblech und weist einen durch die sich überlappenden Schlitzbereiche hindurchgehenden Steg 231, einen etwa rechtwinklig von dem Steg 231 in Richtung der Zugspannung des Bandendes 11 abstehenden Haken 232, einen sich etwa rechtwinklig von dem Steg 231 in Richtung der Zugspannung des Bandendes 12 erstreckenden Abschnitt 233 sowie eine sich an diesen anschließende Greiflasche 234 auf. Der Haken 232, der an seinem Ende flach ausgebildet ist, hat eine solche Länge, daß er den Querschlitz 13, in den er eingesetzt ist, von der Unterseite her überbrückt und mit seinem Ende unter der diesen Steg begrenzenden querlaufenden Leiste 14 liegt. Der Steg 231 verläuft — im Querschnitt des Rohres 20 gesehen — etwa radial, wobei er in Figur 4 von einer Leiste 14 des oberen Bandendes 12 nach rechts und von einer Leiste 14 des darunterliegenden Bandendes 11 nach links gezogen wird. Durch das infolge der Scherung entstehende Moment wird der Haken 232 fest gegen die Unterseite der Leiste 14 des unteren Bandendes gedrückt und gleichzeitig wird der Abschnitt 233 von außen her gegen das obere Bandende gedrückt. Die schräg nach außen abstehende Greiflasche 234 kann nach der Montage der Bandklemme niedergedrückt und flach an die Außenseite des oberen Bandendes 12 angelegt werden.

Wie Figur 5 zeigt, befinden sich an dem Abschnitt 233 seitlich abstehende, schräg nach unten gebogene Laschen 235, die sich von außen her an die schrägen Seitenflanken der Leisten 14 anlegen, so daß im montierten Zustand der Bandklemme keine unbeabsichtigten seitlichen Verschiebungen oder Verschwenkungen erfolgen können. Die Breite des Hakens 232 entspricht der Breite der geradlinigen Oberseite eines Steges 14, so daß der Haken 232 unterhalb des Steges 14 aufgenommen wird.

Die in Figur 6 dargestellte Variante der Bandklemme, die mit 23' bezeichnet ist, ist in gleicher Weise ausgebildet wie die Bandklemme 23, jedoch mit dem Unterschied, daß der Haken 232' von dem Steg 231 aus nicht nach vorne, sondern nach hinten absteht — also unter den Abschnitt 233 zurückspringt. Der Haken 232' untergreift diejenige Leiste 14 des unteren Bandendes, deren Kante direkt gegen den Steg 231 drückt. Der Haken 232' kann daher erheblich kürzer ausgebildet werden als der nach vorne ragende Haken 232.

**Patentansprüche**

1. Verbindungsvorrichtung für zwei übereinanderliegende, unter ständigem, entgegengesetzten Zug in ihrer Längsrichtung stehende Bandteile (11; 12), insbesondere den Bandenden (11; 12) einer Rohrschelle (10), die mehrere in Längsrichtung hintereinander angeordnete Querschlitze (13) aufweisen, mit einer Bandklemme (23; 23'), die durch einander überlappende Querschlitze (13) der Bandteile (11; 12) mit einem Steg (231) hindurchsteckbar ist, der ein das untere Bandteil (11) untergreifendes Hakenende (232; 232') aufweist, dadurch gekennzeichnet, daß die Bandklemme (23; 23') einen einzigen solchen Steg (231) aufweist, an dem zwei Schlitzkanten verschiedener Bandteile (11; 12) an verschiedenen Seiten mit der Zugkraft der Bandteile (11; 12) anliegen, und daß sich an den Steg (231) ein mit einer abstehenden Greiflasche (234) versehener, in Bandrichtung sich erstreckender Abschnitt (233) anschließt, wobei aufgrund der um etwa Banddicke versetzten Angriffspunkte der Zugkräfte ein Drehmoment auf den Steg (231) ausgeübt wird, so daß der an den Steg (231) anschließende Abschnitt (233) vom Steg gegen die Außenseite des äußeren Bandes gedrückt und gesichert ist.

2. Verbindungsvorrichtung nach Anspruch 1, dadurch gekennzeichnet, daß das Hakenende (232) in Gegenrichtung zur Greiflasche (234) von dem Steg (231) absteht.

3. Verbindungsvorrichtung nach Anspruch 1, dadurch gekennzeichnet, daß das Hakenende (232') in Richtung auf die Greiflasche (234) zurückgebogen ist.

4. Verbindungsvorrichtung nach einem der Ansprüche 1 bis 3, dadurch gekennzeichnet, daß die Bandteile (11; 12) in Querrichtung gewölbt sind und das Hakenende (231; 232) unter die Wölbung greift und die Bandklemme (23; 23') seitlich in Anpassung an die Wölbung schräg abstehende Laschen (235) aufweist.

5. Verbindungsvorrichtung nach Anspruch 4, dadurch gekennzeichnet, daß die Bandteile (11; 12) nur im Breitenbereich der Querschlitze (13) etwa trapezförmig ausgewölbt sind, und daß die Breite des Steges (231) und des Hakenendes (232; 232') der Breite des mittleren Trapezbalkens der die Querschlitze (13) begrenzenden Leisten (14) entspricht.

**Claims**

1. Connection device for two belt parts (11; 12) overlapping one another and under permanent opposed stress in its longitudinal direction, in particular the belt ends (11; 12) of a tube clamp (10) which have several transverse slots (13) disposed one behind the other in the longitudinal direction, having a belt clip (23; 23') which can be inserted trough overlapping transverse slots (13) of the belt parts (11; 12) with a flange (231) which has a hook end (232; 232') gripping under the lower belt part (11), characterised in that the belt clip (23; 23') has a single such flange (231) against which two slot edges of different belt parts (11; 12) abut on different sides with the tension of the belt parts (11; 12), and in that a section (233) extending in the direction of the belt and provided with a distant gripping strap (234) is connected to the flange (231), whereby a torque is exerted on the flange (231) because of the points of application of the tension displaced approximately by the belt thickness, so that the section (233) connected to the flange (231) is pressed by the flange against the exterior of the outer belt and is secured.

2. Connection device according to claim 1, characterised in that the hook end (232) is distant from the flange (231) in the opposite direction to the gripping strap (234).

3. Connection device according to claim 1, characterised in that the hook end (232') is bent back towards the gripping strap (234).

4. Connection device according to one of claims 1 to 3, characterised in that the beld parts (11; 12) are curved in the transverse direction and the hook end (231; 232) grips under the curve and the belt clip (23; 23') has obliquely distant straps (235) laterally in adaptation to the curve.

5. Connection device according to claim 4, characterised in that the belt parts (11; 12) are curved out in the rough shape of a trapezoid only in the wide area of the transverse slots (13), and in that the width of the flange (231) and the hook end (232; 232') corresponds to the width of the central trapezoidal bar of the fillets (14) limiting the transverse slots (13).

## Revendications

1. Dispositif d'assemblage de deux parties de bande (11, 12) superposées, soumises, dans le sens de leur longueur, à une traction permanente dans les sens opposés, notamment d'extrémités de bande (11, 12) d'un collier pour tubes (10), qui comportent plusieurs fentes transversales (13) ménagées à la suite les unes des autres dans le sens longitudinal, avec une agrafe à bandes (23, 23') qui peut s'engager dans des fentes transversales superposées (13) des parties de bande (11, 12) par une languette (231) qui comporte une extrémité pliée (232, 232') qui s'engage sous la partie de bande inférieure (11), caractérisé en ce que l'agrafe de bande (23, 23') comporte une seule languette (231) de ce type contre laquelle deux bords de fentes de parties de bande différentes (11, 12) s'appliquent sur les côtés différents avec la force de traction des parties de bande (11, 12) et en ce que la languette (231) se raccorde à un secteur (233) muni d'une bride de préhension (234) qui se prolonge dans le sens de la bande en s'en écartant, le décalage des points d'application des forces de traction, distants d'environ l'épaisseur de la bande, faisant que la languette (231) est soumise à un moment de rotation, de sorte que le secteur (233) qui se raccorde à la languette (231) est poussé par la languette et bloqué contre le côte extérieur de la bande extérieure.

2. Dispositif d'assemblage selon la revendication 1, caractérisé en ce que l'extrémité pliée (232, 232') de la languette s'écarte de la languette (231) dans la direction opposée à la bride de préhension (234).

3. Dispositif selon la revendication 1, caractérisé en ce que l'extrémité pliée (232') est repliée dans la direction de la bride de préhension (234).

4. Dispositif d'assemblage selon l'une des revendications 1 à 3, caractérisé en ce que les parties de bande (11, 12) ont une forme en voûte dans le sens transversal, que l'extrémité pliée (231, 232) de la languette s'engage sous la partie en voûte et que l'agrafe de bande (23, 23') comporte des brides (235) qui s'écartent obliquement sur les côtés en s'adaptant a la forme de la voûte.

5. Dispositif d'assemblage selon la revendications 4, caractérisé en ce qu'uniquement sur la largeur des fentes transversales (13) les parties de bande (11, 12) ont une forme en voûte de section à peu près trapézoïdale et en ce que la largeur de la languette (231) et de son extrémité pliée (232, 232') correspond à la largeur de la base médiane du trapèze des passerelles (14) séparant les fentes transversales (13).

0 055 448

FIG.1

FIG.2

FIG.3

FIG.4

FIG.5

FIG.6

7